# EUROPEAN PATENT APPLICATION

(11) **EP 4 726 488 A1**
(43) Date of publication of application: **15.04.2026**
(21) Application number: 24818646.2
(22) Date of filing: 04.06.2024
(51) Int. Cl.: G05D 1/43

(54) **PATH ALLOCATION METHOD AND APPARATUS**

(30) Priority: 09.06.2023 CN 202310686802
(71) Applicant: Hangzhou Hikrobot Co., Ltd., Hangzhou, Zhejiang 310051 (CN)
(72) Inventor: ZHANG, Zhiyu, Hangzhou, Zhejiang 310051 (CN); WU, Yingying, Hangzhou, Zhejiang 310051 (CN); XU, Zhijun, Hangzhou, Zhejiang 310051 (CN)
(74) Representative: Epping - Hermann - Fischer
(86) International application number: PCT/CN2024/097304
(87) International publication number: WO 2024/251114

(57) **Abstract**

An embodiment of the present application provides a method and an apparatus for path allocation, and relates to the technical field of data processing. The method includes: if a target robot is in a non-load state, determining a destination of the target robot; allocating a path leading to the destination for the target robot based on a target passage in which space under the goods shelves is not occupied by any robot; and sending the allocated path for the target robot. The solution provided by the embodiment of the present application can reduce the probability of congestion of the robots in the warehouse.

## Description

The present application claims the priority to a Chinese patent application No. 202310686802.1 filed with the China National Intellectual Property Administration (CNIPA) on June 9, 2023 and entitled "METHOD AND APPARATUS FOR PATH ALLOCATION", which is incorporated herein by reference in its entirety.

### Technical Field

The present application relates to the technical field of data processing, in particular to a method and an apparatus for path allocation.

### Background

With the development of robot technology, robots are increasingly widely used in intelligent storage scenarios. For example, robots can perform tasks such as unloading of goods, picking up of goods, and inventorying of goods in warehouses, thereby realizing automated management of the warehouse.

When a robot performs a task in a warehouse, a scheduling device needs to allocate a path for the robot to travel to a task site based on an area where no goods is placed, so that the robot can travel along the allocated path to the task site to perform the task.

Although the scheduling device can allocate a path for the robot by using the above method, different robots performing tasks in the warehouse all share the above area where no goods is placed. When there are a large number of robots, the paths allocated by the scheduling device for the different robots are prone to conflict, which can easily lead to congestion of the robots in the warehouse.

### Summary

The purpose of embodiments of the present application is to provide a method and an apparatus for path allocation, in order to reduce the probability of congestion of the robots in a warehouse. The specific technical solutions are as follows:
In a first aspect, an embodiment of the present application provides a method for path allocation, including:
determining, if a target robot is in a non-load state, a destination of the target robot;
allocating a path leading to the destination for the target robot, based on a target passage in which space under goods shelves is not occupied by anyrobot;
sending an allocated path to the target robot.

In an embodiment of the present application, allocating the path leading to the destination for the target robot, based on the target passage in which the space under the goods shelves is not occupied by any robot, includes:
selecting passage(s) from passable passage by giving priority to the target passage, wherein the passable passage includes the target passage and an area in which no goods shelf is placed;
allocating the path leading to the destination for the target robot based on the selected passage(s).

In an embodiment of the present application, allocating the path leading to the destination for the target robot, based on the target passage in which the space under the goods shelves is not occupied by any robot, includes:
determining, from robot waiting sites corresponding to the target passage, a target waiting site at which the target robot travels out from the space under goods shelves based on the destination;
allocating a first sub-path leading to the target waiting site for the target robot, based on the target passage;
allocating a second sub-path from the target waiting site leading to the destination for the target robot, based on an area in which no goods shelf is placed.

In an embodiment of the present application, allocating the second sub-path from the target waiting site leading to the destination for the target robot, based on the area in which no goods shelf is placed, includes:
after determining that the target robot has traveled to the target waiting site, allocating the second sub-path from the target waiting site leading to the destination for the target robot, based on the area in which no goods shelf is placed.

In an embodiment of the present application, determining, from the robot waiting sites corresponding to the target passage, the target waiting site at which the target robot travels out from the space under the goods shelves based on the destination, includes:
determining, from the robot waiting sites corresponding to the target passage, a target waiting site at which the target robot travels out from the space under the goods shelves and which is closest to the destination.

In an embodiment of the present application, allocating the path leading to the destination for the target robot, based on the target passage in which the space under the goods shelves is not occupied by any robot, includes:
allocating a third sub-path for the target robot, based on the target passage in which the space under the goods shelves is not occupied by any robot;
allocating a fourth sub-path from an endpoint of the third sub-path leading to the destination for the target robot, based on an area in which no goods shelf is placed.

In an embodiment of the present application, the method further includes:
allocating, if the target robot is in a fully-load state, a path leading to the destination for the target robot based on an area in which no goods shelf is placed;
sending an allocated path to the target robot.

In an embodiment of the present application, the area in which no goods shelf is placed includes a preset passage and a laneway storage area in which no goods shelf is placed in a warehouse.

In a second aspect, an embodiment of the present application provides an apparatus for path allocation, including:
a destination determining module, configured for determining, if a target robot is in a non-load state a destination of a target robot;
a first path allocation module, configured for path allocation leading to the destination for the target robot, based on a target passage in which space under goods shelves is not occupied by any robot;
a first path sending module, configured for sending an allocated path to the target robot.

In an embodiment of the present application, the first path allocation module is specifically configured for selecting passage(s) from a passable passage by giving priority to the target passage, wherein the passable passage includes the target passage and an area in which no goods shelf is placed; and allocating the path leading to the destination for the target robot based on the selected passage(s).

In an embodiment of the present application, the first path allocation module includes:
a target waiting site determining sub-module, configured for determining, from robot waiting sites corresponding to the target passage, a target waiting site at which the target robot travels out from the space under goods shelves based on the destination;
a first path allocation sub-module, configured for allocating a first sub-path leading to the target waiting site for the target robot, based on the target passage;
a second path allocation sub-module, configured for allocating a second sub-path from the target waiting site leading to the destination for the target robot, based on the area in which no goods shelf is placed.

In an embodiment of the present application, the second path allocation sub-module is specifically configured for, after determining that the target robot has traveled to the target waiting site, allocating the second sub-path from the target waiting site leading to the destination for the target robot, based on the area in which no goods shelf is placed.

In an embodiment of the present application, the target waiting site determining sub-module is specifically configured for determining, from the robot waiting sites corresponding to the target passage, a target waiting site at which the target robot travels out from the space under the goods shelves and which is closest to the destination.

In an embodiment of the present application, the first path allocation module is specifically configured for allocating a third sub-path for the target robot, based on the target passage in which the space under the goods shelves is not occupied by any robot; and allocating a fourth sub-path from an endpoint of the third sub-path leading to the destination for the target robot, based on an area in which no goods shelf is placed.

In an embodiment of the present application, the apparatus further includes:
a second path allocation module, configured for allocating, if the target robot is in a fully-load state, a path leading to the destination for the target robot based on an area in which no goods shelf is placed;
a second path sending module, configured for sending an allocated path to the target robot.

In an embodiment of the present application, the area in which no goods shelf is placed includes a preset passage and a laneway storage area in which no goods shelf is placed in a warehouse.

In a third aspect, an embodiment of the present application provides an electronic device, which includes:
a memory, configured for storing a computer program;
a processor, configured for implementing the methods described in the first aspect when executing the program stored on the memory.

In a fourth aspect, an embodiment of the present application provides a computer-readable storage medium having a computer program stored therein, wherein the computer program, when executed by a processor, implements the methods described in the first aspect.

In a fifth aspect, an embodiment of the present application further provides a computer program product containing instructions, which when running on a computer, cause the computer to implement the methods described in the first aspect above.

It can be seen from the above description that when the solution provided by the embodiment of the application is applied to allocate a path for a robot, the destination of the robot in a non-load state can be determined, and then a path leading to the destination can be allocated for the target robot based on the target passage in which the space under the goods shelves is not occupied by any robot, so that the target robot can smoothly travel to the destination along the allocated path.

Wherein, the target passage is a passage in which the goods shelves are placed and which is not occupied by any robot, and the path allocated for the target robot is determined based on the target passage. In this way, when the target robot travels along the path allocated based on the target passage, it can pass through the space at the bottom of the goods shelves. Compared with directly allocating a path for the target robot based on an area in which no goods shelf is placed, the passing pressure in the area where no goods shelf is placed is reduced, and the number of robots traveling in the area where no goods shelf is placed is reduced, thereby reducing the occurrence of a conflict between paths of robots and reducing the probability of congestion of the robots in the warehouse.

Of course, it is not necessary to achieve all the advantages described above at the same time to implement any product or method of this application.

### Brief Description of the Drawings

In order to more clearly describe the technical solutions of the embodiments of the present application or the prior art, accompanying drawings that need to be used in the embodiments or the prior art will be briefly described below. Obviously, the accompanying drawings described below are for only some of the embodiments of the present application. For those skilled in the art, they may also obtain other embodiments based on these accompanying drawings.
Fig.1 is a schematic flowchart of a first method for path allocation provided by an embodiment of the present application;
Fig.2 is a schematic diagram of a warehouse area provided by an embodiment of the present application;
Fig.3 is a schematic diagram of a robot passing scene provided by an embodiment of the present application;
Fig.4 is a schematic flowchart of allocating a path provided by an embodiment of the present application;
Fig.5 is a schematic diagram of a robot traveling path in the prior art;
Fig.6 is a schematic diagram of a first robot traveling path provided by an embodiment of the present application;
Fig.7 is a schematic diagram of a second robot traveling path provided by an embodiment of the present application;
Fig.8 is a schematic flowchart of a second method for path allocation provided by an embodiment of the present application;
Fig.9 is a schematic diagram of a structure of an apparatus for path allocation provided by an embodiment of the present application;
Fig.10 is a schematic diagram of a structure of an electronic device provided by an embodiment of the present application.

### Detailed Description

The technical solutions in the embodiments of the present application will be clearly and completely described below with reference to the accompanying drawings in the embodiments of the present application. Obviously, the described embodiments are only some, and not all, of the embodiments of the present application. All other embodiments obtained based on the embodiments of the present application those skilled in the art fall into the scope of protection of the present application.

First, an execution subject of the solutions provided by embodiments of the present application is described.

The execution subject of the solutions provided by the embodiments of the present application is: any electronic device with functions of data processing, data storage, etc. Specifically, the above electronic device can be a scheduling device for allocating a path for a robot within a warehouse.

Then, the application scenario of the solutions provided by the present application is further described.

The application scenario of the solutions provided by the present application is a scenario where a robot performs a task in a warehouse with goods shelves placed.

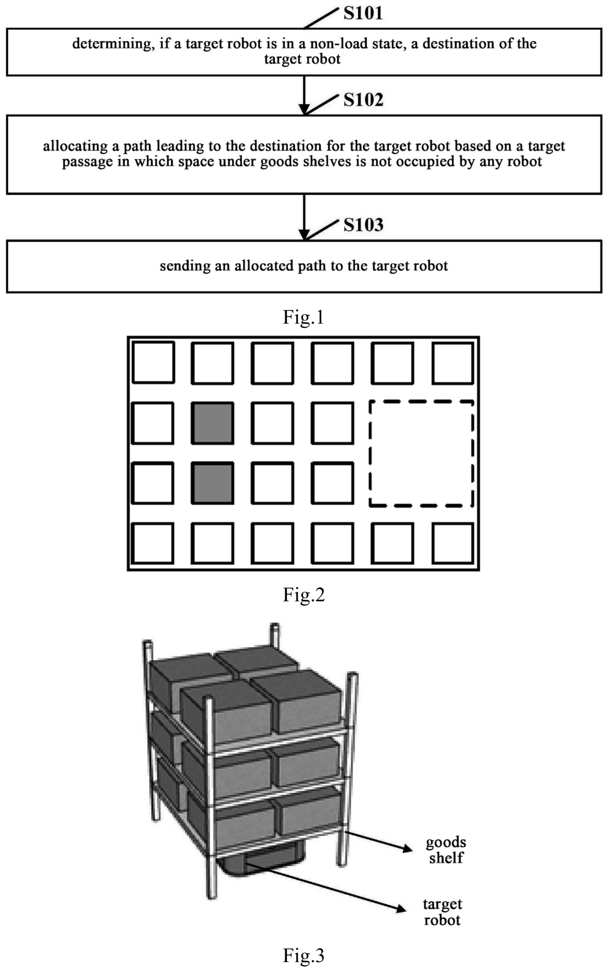

In one case, a dedicated passage reserved in the warehouse for the robot to pass through can be referred to as a main passage, and goods shelves are placed in order in an area for storage in each column, and no additional passage is reserved between the areas in each of the columns. The above area for storage in each column can be referred to as a laneway storage area. An intuitive introduction for the laneway storage area can be referred to the description with reference to Fig.2 below, which will not be repeated here. The above scenario can be referred to as a scenario of an automated dense storage warehouse.

In another case, in addition to the main passage, an additional passage can be reserved between two columns of laneway storage areas. However, in order to increase storage density, in general, passages will only be reserved between some of laneway storage areas. For example, if there are laneway storage areas 1-10 in total, a passage is reserved between laneway storage areas 3 and 4, a passage is reserved between laneway storage areas 7 and 8, and no passage is reserved between the remaining laneway storage areas.

In the above scenario, there are many laneway storage areas for storage and few dedicated passages reserved for robots to pass through in the warehouse. In this way, when there are many robots, paths allocated by the scheduling device using the reserved passages for different robots are prone to conflict, which may lead to congestion of the robots in the warehouse.

In view of the above situation, an embodiment of the present application provides a path allocation solution to reduce the probability of congestion of the robots in the warehouse.

A path allocation solution provided by the embodiment of the present application will be described below in detail.

Referring to Fig.1, which is a schematic flowchart of a first method for path allocation provided by an embodiment of the present application, the method includes the following steps S101 to S103.

Step S101: determining, if a target robot is in a non-load state, a destination of the target robot.

In an intelligent storage scenario, there are usually multiple robots in the warehouse that perform tasks such as unloading of goods, picking up of goods, and inventorying of goods. Loading state of each robot may be different. For example, a robot can be in the non-load state or in a fully-load state.

The fully-load state indicates that the robot carries a load, and the non-load state indicates that the robot does not carry a load. Wherein, the present application does not limit the above load and the way in which the robot carries the load. For example, the above load may be goods themselves or a goods shelf where the goods are stored; the way in which the robot carries the load may be lifting from a bottom of the goods shelf, thereby lifting the goods shelf for transportation, and so on.

The above target robot may be any robot in the non-load state in the warehouse.

For example, the target robot can be a robot that has recently entered the warehouse and has not yet been assigned a task, which now is in the non-load state; or can be a robot that has completed a previous task of unloading of goods and switched from a fully-load state to the non-load state; or can be a robot that has switched from a target task to a transporting task, wherein the above target task is a task which do not require carrying a load such as a task of goods information collection, etc., or other robots.

If the robot is performing a transporting task, the robot is transporting a goods shelf or goods to a task site and is not in the non-load state, so it is not the target robot in the non-load state.

In one case, the robot can detect its own loading state, and send, if the robot is detected to be in the non-load state, a task allocation request to a scheduling device. After receiving the task allocation request, the scheduling device can obtain a device identifier carried in the task allocation request, or a device identifier received together with the task allocation request, and determine a robot corresponding to the device identifier as the target robot.

In an embodiment of the present application, after the robot detects its own loading state and obtains a first detection result, it can send a request to the scheduling device to obtain a second detection result obtained by the scheduling device detecting whether the robot is loading, and verify the first detection result obtained by itself based on the second detection result. If the loading state characterized by the second detection result is consistent with that characterized by the first detection result, the robot can determine that the first detection result obtained by its own detection is accurate, that is, it can determine that its own loading state is the loading state reflected by the first detection result.

In another case, the scheduling device can determine a target robot from the robots in the non-load state, for a task site with a task to be performed, according to distances between the robots in the non-load state in the warehouse and the task site.

The above task to be performed may be any task in a task pool maintained by the scheduling device.

For example, a robot in the non-load state that is closest to the above task site is determined as the target robot; for another example, robots whose distances to the above task site is less than a preset distance threshold is determined from the robots in the non-load state, and then a randomly selected robot from the determined robots is taken as the target robot, etc.

The scheduling device may obtain an image or video taken for the robot in the warehouse, and detect whether the robot in the warehouse is in the fully-load state or in the non-load state through image analysis or video analysis. The specific method of the above image analysis or video analysis will not be described in detail here.

In an embodiment of the present application, after the scheduling device obtains a second detection result by detecting whether the robot is loading, it can obtain a first detection result obtained by the robot detecting its own loading state, and verify the second detection result obtained by itself based on the first detection result. If the loading state characterized by the first detection result is consistent with that characterized by the second detection result, the scheduling device can determine that the second detection result is accurate, that is, it can determine that the loading state of the robot is the loading state reflected by the second detection result.

The above destination is described below.

In an implementation, the above destination may be any task site with a task to be performed, and may be specifically set by the scheduling device according to actual needs, which is not limited in the present application.

For example, if goods need to be stored at a site A, the site A is a task site, and the site A can be determined as a destination of a target robot; if goods at a site B need to be picked up, the site B is a task site, and the site B can be determined as the destination of the target robot; if goods at a site C needs to be inventoried, the site C is a task site, and the site C can be determined as the destination of the target robot.

In another implementation, the above destination may also be a waiting site near the task site.

Specifically, the above waiting site may be any site near the task site, such as an area which is closest to the task site and where no goods shelf is placed.

In an embodiment of the present application, the area where no goods shelf is placed may include a preset passage and a laneway storage area where no goods shelf is placed in the warehouse, which will be described later and will not be described in detail here.

The following is an example of how to determine the destination.

In an implementation, a scheduling device may randomly select a target task site from all task sites, and determine the target task site as a destination of a target robot.

In another implementation, the scheduling device may acquire a current position of the target robot, and then select a target task site from all task sites based on the acquired current position and positions of all task sites, and determine the target task site as the destination of the target robot.

For example, distances between individual task sites and the current position of the target robot can be calculated first, a target task site corresponding to the smallest distance can be selected from the distances, and the target task site can be determined as the destination, or, target task sites corresponding to a distance less than a first preset distance can be selected, and the above destination can be determined from the target task sites, etc.

From the above description, it can be seen that in one case, the destination can be a waiting site near the above task site. In view of this, in an embodiment of the present application, the above implementation can be first used to select a target task site, and then a waiting site near the target task site is determined as the above destination.

Wherein, the waiting site near the target task site may be any site with a distance from the target task site being less than a second preset distance.

The first preset distance and the second preset distance mentioned above can be set by a staff based on experience, specific values of which the embodiment of the present application does not limit.

Step S102: allocating a path leading to the destination for the target robot based on a target passage in which space under goods shelves is not occupied by any robot.

The above target passage is a passage in which goods shelves are placed and the space under the goods shelves are not occupied by the any robot.

The target passage is described more intuitively below with reference to Fig.2.

Fig.2 is a schematic diagram of a warehouse area provided by an embodiment of the present application, which shows the warehouse area at a certain time.

Each of small rectangles in Fig.2 represents each of areas where goods shelves are placed, wherein, each column area formed by the small rectangles in a vertical direction is the laneway storage area mentioned above; an blank area enclosed by a dotted box represents an area where no goods shelf is placed. Wherein, a white rectangle indicates that the space under the goods shelf placed in this area is not occupied by any robot at this time, and a dark rectangle indicates that the space under the goods shelf placed in this area is occupied by a robot at this time. Wherein, the space under the goods shelf being occupied by any robot means that the robot is located in the space under the goods shelf. For example, a robot is going to a certain goods shelf to pick up goods, at this time, the robot enters the space under the goods shelf and is lifting the goods shelf upwards.

It can be seen that in Fig.2, the passage formed by the areas represented by the individual white rectangles and gaps between the individual white rectangles other than the areas represented by the dark rectangles is the target passage.

It should be noted that an occupancy of the space under the goods shelf changes dynamically during an execution of tasks by all the robots in the warehouse. For example, for a goods shelf, the space under it may be occupied by a robot at time 1, and may be unoccupied by any robot at time 2.

The following is an explanation of the method for allocating a path for a target robot based on a target passage.

In an implementation, a path including exclusively the target passage may be allocated for the target robot.

In this implementation, other areas outside the target passage may not be considered, and a path including exclusively the target passage may be allocated for the target robot. Taking Fig.2 as an example, when allocating a path for the target robot, a path including exclusively the target passage may be allocated for the target robot only considering the target passage formed by the areas represented by the white rectangles and the gaps between the white rectangles and without considering the areas represented by the dark rectangles and the area represented by the dotted box.

Specifically, the specific method of path allocation in this implementation is described below in different cases.

In one case, a current position of the target robot can be determined, and the shortest path from the current position to the destination is allocated for the target robot from the target passage.

Wherein, the shortest path from the current position to the destination may be determined based on a preset algorithm, and the algorithm may be a Depth-First-Search algorithm, a Dijkstra algorithm, etc., which will not be described in detail here.

In another case, the current position of the target robot can be determined, and all feasible paths from the current position to the destination can be determined from the target passage, then the distances of all feasible paths can be determined, and the path allocated for the robot can be selected based on the distances corresponding to all feasible paths.

For example, paths with corresponding distances being less than a third preset distance may be selected from the feasible paths first, and then a path may be randomly selected from the selected paths as the path allocated for the robot. The above third preset distance may be set by the staff based on their experience, and its specific value is not limited in the embodiment of the present application.

In yet another case, the current position of the target robot can be determined, and all feasible paths from the current position to the destination can be obtained, and then the distances and values for characterizing passing difficulty of all feasible paths can be determined, and the path allocated for the robot can be determined from all feasible paths based on the distances and values for characterizing passing difficulty of all feasible paths.

For example, a distance and a value for characterizing passing difficulty corresponding to a feasible path are calculated by weighting, in this way, a calculation result combines information in two dimensions of the distance and the value for characterizing passing difficulty, which can characterize the quality of the feasible path, so that the allocated path can be selected from the feasible paths based on the calculation results. For example, based on the calculation results, a feasible path with a short distance and low passing difficulty can be selected as the allocated path.

The above values for characterizing passing difficulty may be determined based on real-time passing conditions of all feasible paths.

Since each feasible path has been determined, the scheduling device can obtain a real-time passing condition of each feasible path and determine a value for characterizing passing difficulty of each feasible path based on the real-time passing condition. The above real-time passing condition can be a road congestion degree of the feasible path, whether there is an obstacle in the feasible path, etc., which will not be described in detail here. Wherein, the road congestion degree of the feasible path can be described by means of the number of robots traveling on that feasible path.

In this implementation, when allocating a path for a target robot in a non-load state, only an area where a goods shelf is placed is considered, and an area where no goods shelf is placed is not considered.

The area where a goods shelf is placed can only be passed by a robot in a non-load state, while the area where no goods shelf is placed can be passed by a robot in the non-load state and a robot in a fully-load state. It can be seen that the area where no goods shelf is placed can be passed by a robot in any loading state, which is "valuable".

Therefore, in this implementation, when allocating a path for a target robot in a non-load state, only an area where a goods shelf is placed is considered, and an area where no goods shelf is placed is not considered. This can reduce the occupancy frequency of the area where no goods shelf is placed, by the target robot in a non-load state, and reduce a passing pressure in the area where no goods shelf is placed, and is beneficial to improving the passing efficiency of the robot in the fully-load state in the area where no goods shelf is placed.

In another implementation, passage(s) may be selected from passable passage by giving priority to the target passage, and then a path leading to the destination may be allocated for the target robot based on the selected passage(s).

Wherein, the above passable passage involves: the target passage and an area where no goods shelf is placed.

The above area where no goods shelf is placed may refer to all areas in the warehouse where no goods shelf is placed, including the main passage reserved mentioned above, the laneway storage area where no goods shelf is placed yet, and other preset areas that are not used for storing goods.

Taking Fig.2 as an example, the area represented by the white rectangle is the target passage, and the area in the dotted box represents the area where no goods shelf is placed. Therefore, the areas represented by the white rectangles and the area in the dotted box is the passable passage.

In some cases, the path from the current position of the robot to the destination cannot be determined by only selecting the target passage. Then, passage(s) can be selected from the passable passage by giving priority to the target passage, and a path leading to the destination can be allocated for the target robot based on the selected passage(s).

Wherein, the passable passage includes the target passage and the area where no goods shelf is placed. The passage(s) being selected from the passable passage by giving priority to the target passage means that, the finally determined path involves the target passage and the area where no goods shelf is placed, and the target passage will be given priority when determining the path.

The target passage being given priority when determining the path can be understood as that the length of the sections located in the target passage in the determined path is as long as possible.

In this case, since the passable passage includes the target passage and the area where no goods shelf is placed, a path being allocated for the target robot based on the passable passage means that, a path is allocated for the target robot according to the target passage and the area where no goods shelf is placed, which can reduce the situation where a path leading to the destination cannot be allocated for the target robot when only the target passage is selected.

Wherein, the specific method of allocating the path based on the passable passage is similar to the method of allocating the path based only on the target passage described above, the only difference is that the target passage is given priority, which is briefly described below.

In an implementation, a third sub-path may be allocated for the target robot based on the target passage in which the space under the goods shelves is not occupied by any robot, and then a fourth sub-path from the endpoint of the third sub-path leading to the destination may be allocated for the target robot based on an area where no goods shelf is placed.

For example, a third sub-path whose endpoint is closest to the destination can be selected based on the target passage. Then, based on the area where no goods shelf is placed, a fourth sub-path from the endpoint of the third sub-path leading to the destination can be allocated for the target robot by using an algorithm such as a shortest path algorithm.

In this way, when the path from the current position of the robot to the destination cannot be determined by selecting exclusively the target passage, the third sub-path is first determined based on the target passage, and then the fourth sub-path from the endpoint of the third sub-path to the destination is allocated for the target robot based on the area where no goods shelf is placed, so that the robot can directly travel along the third sub-path to the endpoint of the third sub-path, and then start from the above endpoint and travel along the fourth sub-path to the destination. In other words, the robot can successfully travel to the destination through the two allocated sub-paths without waiting in the middle. Additionally, it avoids the situation where the path leading to the destination cannot be allocated for the target robot when only the target passage is selected, thereby improving the rationality and success rate of path allocation.

It can be seen that in the solution provided by the embodiment of the present application, the passage(s) can be selected from the passable passage by giving priority to the target passage, and a path leading to the destination can be allocated for the target robot based on the selected passage(s). In this way, on the one hand, the length of the target passage in the allocated path is as long as possible, that is, the target passage has a higher priority for being selected, so that during the process of traveling along the allocated path to the destination, the path length that the robot travels in the target passage is relatively long, and the path length that the robot travels in the area where no goods are placed is relatively short, which is beneficial to reducing the passing pressure in the area where no goods are placed; on the other hand, more areas are taken into consideration when determining the path, which can avoid the situation where the path leading to the destination cannot be allocated for the target robot when only the target passage is selected, thereby improving the rationality and success rate of path allocation.

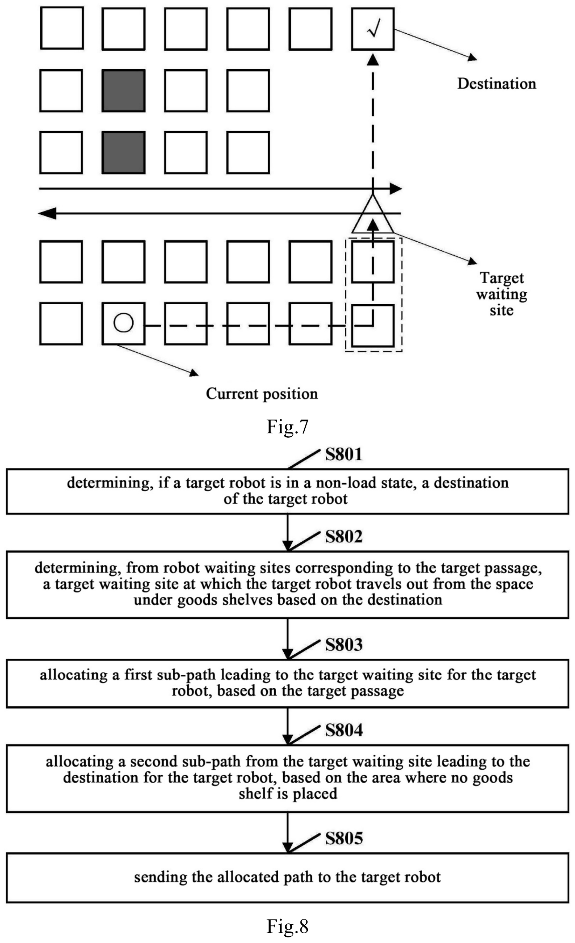

In another implementation, a first sub-path leading to a target waiting site can be allocated for the target robot based on a target passage where the space under the goods shelves is not occupied by any robot, and then a second sub-path from the target waiting site leading to the destination can be allocated for the target robot based on an area where no goods shelf is placed. The specific implementation is detailed in steps S802 to S804 in the embodiment shown in the subsequent Fig.8, which will not be described in detail here.

In an embodiment of the present application, a path may be allocated for a target robot based on a target passage in which the space under the goods shelves is not occupied by any robot and which is not locked.

In one case, after the scheduling device allocates a path leading to a destination for the robot, the path can be locked, and the area included in the path is locked; when it is determined that the robot is traveling along the path, the area included in the path that the robot has passed through is unlocked.

It can be seen that the target passage in which the space under the goods shelves is not occupied by any robot and which is not locked includes: an area in which the space under the goods shelves is not occupied by any robot, except for the area being locked.

In this way, before the robot travels to the destination along the allocated path, the area included in the above path can no longer be used to allocate a path for other robots. That is, when allocating paths for other robots, the area included in the above path will be avoided, which reduces the probability of a conflict between paths of robots in the warehouse.

In an embodiment of the present application, during the process of the target robot traveling along the allocated path, a locking status of the area in the above warehouse can be detected in real time, and the target passage in which the space under the goods shelves is not occupied by any robot and which is not locked can be updated in real time based on the detection result. If a preferred path leading to the destination is determined based on the updated target passage, the path allocated for the target robot is updated.

Wherein, the preferred path leading to the destination may refer to a shorter path for the target robot to travel from the current position to the destination, or may refer to a path with a lower value for characterizing passing difficulty for the target robot to travel from the current position to the destination, etc.

For example, at time t1 when the target robot is traveling along the allocated path, it is detected that an area 1 is no longer locked, and it is determined that the updated target passage includes the area 1. Therefore, based on the updated target passage, all feasible paths for the target robot to travel from the current position to the destination can be determined. If there is a preferred path in the determined feasible paths, the path of the target robot will be updated to the preferred path.

In this way, during the process of the target robot traveling along the allocated path, the preferred path can be updated for the target robot in real time according to the locking status of the areas in the warehouse, which is beneficial to improving the efficiency of the target robot to perform tasks.

In an embodiment of the present application, taking into account that the occupancy of the space under the goods shelves changes dynamically during the execution of tasks by robots in the warehouse, when allocating a path for a target robot, a first estimated duration that the space under a goods shelf is occupied can be estimated, and a second estimated duration that the target robot will take to reach the target area can be estimated. When it is determined that the first estimated duration and the second estimated duration meet a target condition, a path is allocated for the target robot based on the target passage where the space under the goods shelves is not occupied by any robot and the area where the space under the goods shelf is not occupied by any robot.

Wherein, the above first estimated duration can be set by the staff based on their experience; or, after determining a task performed by the robot occupying the target area, a first estimated duration corresponding to a task can be determined based on a correspondence between the task and the first estimated duration. For example, the goods transporting task corresponds to the first estimated duration 1, the goods information collection task corresponds to the first estimated duration 2, and so on.

The above second estimated duration may be determined based on a moving speed of the target robot and a distance from the target robot to the area where the space under the goods shelves is not occupied by any robot.

The target condition may be that the first estimated duration is not less than the second estimated duration that the target area is occupied.

In this way, in the case of meeting the above target condition, the target area is no longer occupied when the target robot reaches the target area. Therefore, in this case, a path can be allocated for the target robot based on the area where the space under the goods shelves is not occupied by any robot in addition to the target passage where the space under the goods shelves is not occupied by any robot, thereby increasing the area considered when allocating the path and improving the success rate of path allocation.

It should be noted that the method of allocating a path for the target robot is not limited to the method described in the above embodiment. Those skilled in the art can also obtain more method for path allocation according to actual needs, which will not be described here.

Step S103: sending an allocated path to the target robot.

After determining the path allocated for the target robot, the scheduling device can send the allocated path to the target robot so that the target robot can travel to the destination according to the allocated path.

It can be seen from the above description that in the solution provided by the embodiment of the present application, the path allocated for the target robot will include a target passage where the space under the goods shelves is not occupied by any robot, when the target robot travels along the allocated path, it can freely pass through the space under the goods shelves of the target passage.

A more intuitive description is given below with reference to Fig.3.

Referring to Fig.3, it is a schematic diagram of a robot passing scene provided by an embodiment of the present application.

As can be seen from Fig.3, the height of the target robot is smaller than that of the space under the goods shelf. In addition, the rotation diameter of the target robot is slightly smaller than the maximum diameter of the inscribed circle of the space under the goods shelf, and the width of the target robot is also smaller than access space of the goods shelf in the length and width direction. In this way, the target robot can freely turn 360-degree in the space under the goods shelf, so that it can freely pass through the space under the goods shelf. The above access space in the width direction can be understood as: the size in the width direction of the space under the goods shelf for the robot to access, for example, it can be the minimum spacing between the goods shelf legs in the width direction, etc.; the above access space in the length direction can be understood as the size in the length direction of the space under the goods shelf for the robot to access, for example, it can be the minimum spacing between the goods shelf legs in the length direction, etc.

It can be seen from the above description that when the solution provided by the embodiment of the application is applied to allocate a path for a robot, the destination of the robot in a non-load state can be determined, and then a path leading to the destination can be allocated for the target robot based on the target passage where the space under the goods shelves is not occupied by any robot, so that the target robot can smoothly travel to the destination along the allocated path.

The target passage is a passage where the goods shelves are placed and the space under the goods shelves is not occupied by any robot, and the path allocated for the target robot is determined based on the target passage. In this way, when traveling along the path allocated based on the target passage, the target robot can pass through the space at the bottom of the goods shelves. Compared with directly allocating a path for the target robot based on an area where no goods shelf is placed, the passing pressure in the area where no goods shelf is placed is reduced, and the number of robots traveling in the area where no goods shelf is placed is reduced, thereby reducing the occurrence of a conflict between paths of robots and reducing the probability of congestion of the robots in the warehouse.

In addition, the target passage is an area in which goods shelves are placed and the space under the placed goods shelves is not occupied by any robot. Therefore, allocating a path for the target robot based on the target passage is actually allocating the path for the target robot based on the area in which goods shelves are placed. It can be seen that in the solution provided by the embodiment of the present application, when the area where no goods shelf is placed is small, a path can be allocated for the target robot additionally based on the target passage in which the space under the goods shelves is not occupied by any robot, that is, the path can be allocated for the target robot additionally based on the area in which the goods shelves are placed, so that when traveling to the destination along the allocated path, the robot can pass through the area in which no goods shelf is placed, and can additionally pass through the area in which the goods shelves are placed, and therefore the passing efficiency of the robot still maintains high when the proportion of the area where no goods shelf is placed is small. On this basis, compared with the prior art in which more passages are reserved to improve the passing efficiency, in the solution provided by the embodiment of the present application, the area where the goods shelves are placed can be additionally used for path allocation, so the solution provided by the embodiment of the present application can reduce the number of the above passages while ensuring the passing efficiency, and the above reserved passages are areas in which no goods shelf is placed, thereby reducing the number of the above passages, that is, reducing the proportion of the area where no goods shelf is placed, thereby improving the storage space utilization rate of the warehouse.

In an embodiment of the present application, the area in which no goods shelf is placed includes a preset passage in a warehouse and a laneway storage area where no goods shelf is placed.

The above preset passage is an area dedicated to be passed through by a robot without placing goods shelf, and the above laneway storage area is a preset area for storing goods.

When no goods shelf is placed in the laneway storage area, the laneway storage area can also be flexibly used as an area where no goods shelf is placed for the robot to pass through, which increases the proportion of the area where no goods shelf is placed available for the robot to pass through, which is beneficial to improving passing efficiency of the robot.

In an embodiment of the present application, the method for path allocation described in the embodiment shown in Fig.1 may further include the following steps:
if the target robot is in a fully-load state, allocating a path leading to the destination for the target robot based on an area where no goods shelf is placed, and sending the allocated path to the target robot.

Based on the foregoing, it can be seen that the area where no goods shelf is placed may include the preset passage and the laneway storage area where no goods shelf is placed in the warehouse.

In this step, the current position of the target robot can be determined, and the shortest path from the current position to the destination can be allocated for the target robot based on the area where no goods shelf is placed; or, the current position of the target robot can be determined, and each feasible path from the current position to the destination can be obtained based on the area where no goods shelf is placed, and then the distance of each feasible path can be determined, and the path allocated for the robot can be selected based on the distance corresponding to each feasible path, etc. The specific implementation is similar to the method for allocating the path introduced in step S102 in the embodiment shown in Fig.1 above, and the only difference is that the target passage is replaced by the area where no goods shelf is placed, which will not be repeated here.

It can be seen that although the robot in a fully-load state cannot travel in the target passage where the space under the goods shelves is not occupied by any robot, it can travel in the area where no goods shelf is placed. Therefore, a path leading to the destination can be successfully allocated for the target robot based on the area where no goods shelf is placed.

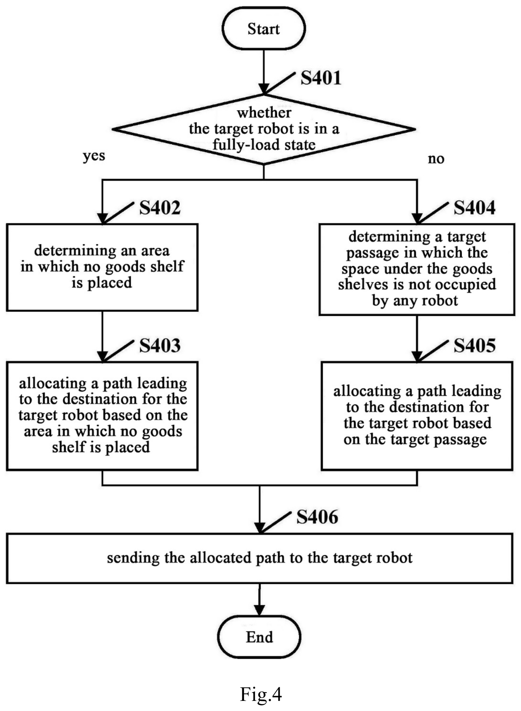

An description of the whole process for allocating a path provided by an embodiment of the present application is given below with reference to Fig.4.

Referring to Fig.4, which is a schematic flowchart for allocating a path provided by an embodiment of the present application, the process includes the following steps S401 to S406.

Step S401: determining whether a target robot is in a fully-load state, if the target robot is in the fully-load state, performing step S402, if the target robot is not in the fully-load state, performing step S404.

Specifically, if a task allocation request sent by the target robot is received, it can be determined that the target robot is in a non-load state, if a task allocation request sent by the target robot is not received, it is determined that the target robot is in the fully-load state.

Step S402: determining an area in which no goods shelf is placed.

The meaning of the area in which no goods shelf is placed has been explained in the aforementioned embodiment shown in the Fig.1.

Specifically, information such as an area position and size of the area in which no goods shelf is placed can be recorded in the scheduling device and updated in real time by the staff, so that the scheduling device can determine the area in which no goods shelf is placed based on the above information.

Step S403: allocating a path leading to the destination for the target robot based on the area in which no goods shelf is placed.

Step S404: determining a target passage in which the space under the goods shelves is not occupied by any robot.

Specifically, the scheduling device can obtain the current position of the robot in the warehouse in real time, and determine the target passage in which the space under the goods shelves is not occupied by any robot, based on the obtained position.

Step S405: allocating a path leading to the destination for the target robot based on the target passage.

The method for allocating the path in the above step S403 and step S405 can be obtained based on the method for allocating the path introduced in the embodiment shown in Fig.1, which will not be repeated here.

Step S406: sending the allocated path to the target robot.

It can be seen that when the solution provided by the embodiment of the present application is applied to allocate a path for a robot, the path can be allocated for the robot by using different path allocation strategies according to the different loading statuses of the robots. Specifically, if the robot is in a fully-load state, a path leading to the destination can be allocated for the robot based on the area where no goods shelf is placed; if the robot is in non-load state, a path leading to the destination can be allocated for the robot based on the target passage where the space under the goods shelves is not occupied by any robot.

The target passage is a passage in which the goods shelves are placed and the space under the goods shelves is not occupied by any robot, and the path allocated for the target robot is determined based on the target passage. In this way, when traveling along the path allocated based on the target passage, the target robot can pass through the space at the bottom of the goods shelves. Compared with directly allocating a path for the target robot based on an area where no goods shelf is placed, the passing pressure on the above passage is reduced, and the number of robots traveling in the above passage is reduced, thereby reducing the occurrence of a conflict between paths of robots and reducing the probability of congestion of the robots in the warehouse.

In conclusion, in the solution provided by the embodiment of the present application, the method for allocating a path can be flexibly determined based on the loading state of the robot, and when the robot is in a non-load state, a path is allocated for the robot by using the target passage where the space under the goods shelves is not occupied by any robot. Compared with allocating the path for the robot only by using the area in which no goods shelf is placed without considering the area in which the goods shelves are placed, the robot can not only pass through the area where no goods shelf is placed, but also pass through the area in which the goods shelves are placed, which greatly improves the passing efficiency of the robots in the warehouse and reduces the probability of congestion of the robots in the warehouse.

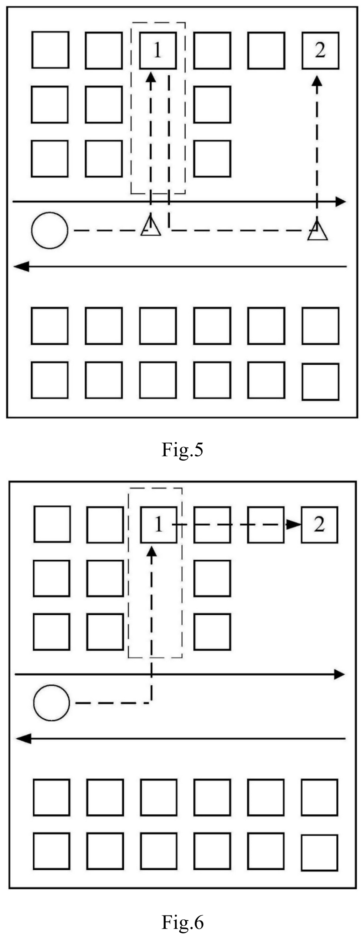

Taking the continuous execution of two tasks as an example, the difference between the solution provided by the embodiment of the present application and the prior art is described in detail with reference to Fig.5 and Fig.6.

The first task is a task of storing goods, and performing the first task needs to travel to a destination 1, and the second task is a task of picking up of goods, and performing the second task needs to travel to a destination 2.

First, the path allocation solution in the prior art is described.

Referring to Fig.5, it is a schematic diagram of a robot traveling path in the prior art.

The meanings of the white rectangles in Fig.5 are the same as those in Fig.2. The circle represents a target robot, the dotted box represents a laneway storage area, the area between the double solid arrows represents a reserved passage, the triangle represents an intersection waiting site in the passage, the rectangle marked with 1 represents the destination 1, the rectangle marked with 2 represents the destination 2, and the two dotted arrows represent paths allocated for the robot traveling to the destination 1 and the destination 2, respectively.

As can be seen from Fig.5, after the path is allocated for the target robot according to the solution in the prior art, the target robot in a fully-load state first reaches the destination 1 along the reserved passage and the area where no goods shelf is placed (the area where no goods shelf is placed in Fig.5 is the laneway storage area where no goods shelf is placed), and the target robot is in a non-load state after storing the goods at the destination 1. At this time, since the goods shelves are placed on both sides of the laneway storage area, the target robot can only reach the destination 2 along the area where no goods shelf is placed and the reserved passage to perform the next task.

In addition, in the above scenario, if there is already a robot performing task(s) in the laneway storage area, in order not to affect the above robot leaving the laneway storage area after performing tasks, the target robot needs to wait at the intersection waiting site until the above robot completes the task(s) and leaves the laneway storage area, before entering the laneway storage area and reaching the destination. In this way, when picking up and storing operations are performed in multiple laneway storage areas at the same time, the multiple robots will gather at the intersection waiting site to wait, which leads to a serious congestion.

Referring to Fig.6, it is a schematic diagram of a first robot traveling path provided by an embodiment of the present application.

The meaning of each sign in Fig.6 are the same as the respective one in Fig.5. It can be seen that after allocating a path for the target robot according to the solution provided by the embodiment of the present application, the target robot in the fully-load state first reaches the destination 1 along the reserved passage and the area where no goods shelf is placed, and the target robot is in a non-load state after storing goods at the destination 1. At this time, the robot in the non-load state can travel from the space at the bottom of the goods shelves that is not occupied by any robot to the destination 2 according to the path allocated by the scheduling device to perform a next task.

It can be seen by comparing with the prior art that after the solution provided by the embodiment of the present application is applied to allocate a path for the target robot, when the target robot in a non-load state travels to the destination 2 to perform the second task, it does not need to travel along the area where no goods shelf is placed and the reserved passage to reach the destination 2, but can directly pass through the space at the bottom of the goods shelves that is not occupied by any robot to the destination 2. In this way, on the one hand, the passing pressure in the area where no goods shelf is placed and the reserved passage is reduced, and the number of robots traveling in the area where no goods shelf is placed is reduced, thereby reducing the situation of a conflict between paths of robots and reducing the probability of congestion of the robots in the warehouse; on the other hand, it can reduce detours and shorten the path length to the destination 2 for the robot, thereby saving the power consumption of the target robot when performing a task.

Furthermore, since the robot in the non-load state can travel to the next destination directly along the space under the goods shelves, even if there is already a robot performing a task in the laneway storage area, the target robot does not need to wait at the intersection waiting site for the robot performing the task to complete the task and leave the laneway storage area, but can directly enter the laneway storage area and reach the destination. This can reduce the situation that multiple robots are waiting at the intersection waiting site, which is beneficial to alleviate the congestion.

In some cases, based on the embodiment shown in Fig.1, there will be a situation that a path leading to the destination cannot be allocated for the robot by only selecting the target passage. In this case, a first sub-path leading to the target waiting site can be allocated based on the target passage first for the target robot to travel out from the space under the goods shelves, and then, a second sub-path from the target waiting site leading to the destination can be allocated for the target robot based on the area where no goods shelf is placed.

The above scenario is described below with reference to Fig.7.

Referring to Fig.7, it is a schematic diagram of a second robot traveling path provided by an embodiment of the present application.

The meanings of a dark rectangle and a white rectangle in Fig.7 are the same as those in Fig.2. The white rectangle marked with a circle inside represents the current position of a robot, a triangle represents a target waiting site, a white rectangle with a checkmark inside represents a destination, and bidirectional arrows represent a preset passage in the warehouse. Wherein, a dotted arrow pointing from the current position to the target waiting site represents a first sub-path, and a dotted arrow pointing from the target waiting site to the destination represents a second sub-path.

The method of selecting the destination is detailed in an embodiment shown in Fig.8 below, which will not be described in detail here.

It can be seen that the path leading to the destination allocated by the scheduling device for the target robot may include a first sub-path and a second sub-path, wherein the first sub-path is a path selected based on the target passage and leading to the target waiting site, and the second sub-path is a path selected based on the area where no goods shelf is placed and leading to the destination, so that the robot can reach the destination by traveling along the first sub-path and the second sub-path.

In view of the above situation, an embodiment of the present application provides a second method for path allocation.

Referring to Fig.8, which is a schematic flowchart of a second method for path allocation provided by an embodiment of the present application, the method includes the following steps S801 to S805.

Step S801: determining, if a target robot is in a non-load state, a destination of the target robot.

The above step S801 is the same as step S101 in the embodiment shown in Fig.1, which will not be repeated here.

Step S802: determining, from robot waiting sites corresponding to the target passage, a target waiting site at which the target robot travels out from the space under goods shelves based on the destination.

Wherein, a robot waiting site corresponding to the target passage may be a preset area adjacent to the target passage in the area where no goods shelf is placed.

Taking Fig.7 as an example, the robot waiting site corresponding to the target passage shown in the dotted box is the area represented by the triangle in the figure, which is a part of the preset passage in the warehouse adjacent to the target passage.

Each target passage may have a corresponding robot waiting site, and thus, there are generally multiple robot waiting sites. Therefore, the target waiting site at which the target robot travels out from the space under the goods shelves can be determined from the waiting sites.

The method of determining the above target waiting site is described below.

In an implementation, the target waiting site may be randomly selected from the robot waiting sites.

In another implementation, the target waiting site may be determined from all robot waiting sites based on the position of the robot waiting site and the position of the destination.

The embodiment of the present application does not limit the specific method of determining the target waiting site based on the above position, and will be explained below by way of example.

In one case, the distance between each robot waiting site and the destination can be calculated first, and then waiting sites with corresponding distances being less than the fourth preset distance are selected from the robot waiting sites, and the destination at which the target robot travels out from the space under the goods shelves is determined from the selected waiting sites. The fourth preset distance can be set by the staff based on their experience, and the embodiment of the present application does not limit its specific value.

In another case, after calculating the distance between each robot waiting site and the destination, the target waiting site at which the target robot travels out from the space under the goods shelf and which is closest to the destination can be determined from the robot waiting sites.

It can be seen that, for the target robot, the target waiting site determined in this way is the closest to the destination, which makes the second sub-path leading to the destination from the target waiting site shortest. Since the second sub-path is selected based on the area where no goods shelf is placed, the area where no goods shelf is placed that the robot passes through when traveling along the second sub-path can be as small as possible, which greatly reduces the passing pressure in the area where no goods shelf is placed and further reduces the probability of congestion of the robots in the warehouse.

In another implementation, the task execution efficiency of all robots in the warehouse can be comprehensively considered, and the target waiting site at which the target robot travels out from the space under the goods shelves can be determined from the robot waiting sites in a way that the overall passing efficiency of all robots is high.

The embodiment of the present application does not limit the specific method of determining the target waiting site based on the above method, and will be explained below by way of example.

In one case, for each robot in the warehouse, the distance between the destination of the robot and each robot waiting site can be calculated; a candidate waiting site closest to the destination is determined from the robot waiting sites; then it is determined whether the candidate waiting site meets a requirement, wherein the above requirement can be that the number of robots for which the candidate waiting site has been allocated at the current time is not greater than a preset number, etc.; if the candidate waiting site does not meet the requirement, a robot waiting site closest to the destination other than the above candidate waiting site is determined as a new candidate waiting site, and the above step of determining whether the candidate waiting site meets the requirement is returned, until a candidate waiting site that meets the requirement is determined as the target waiting site.

When the same target waiting site is determined for multiple robots, it is prone for the robots to gather at the target waiting site, thereby causing congestion and reducing passing efficiency.

It can be seen that using the above method can ensure that the target waiting site determined for the robot is as close as possible to the destination while ensuring that the number of robots for which the target waiting site is allocated is small. This can reduce the probability of congestion of multiple robots at the destination waiting site, improve the overall passing efficiency of all robots in the warehouse, and be beneficial to making the path planning of all robots in the warehouse tending to be optimal as a whole.

In another case, an average distribution method can be adopted to allocate, from the robot waiting sites, target waiting sites for all robots to travel out from the space under the goods shelves, so that the number of robots for which each robot waiting site is allocated tends to be consistent.

This can also reduce the probability that the number of robots for which a certain target waiting site is allocated is too large, and improve the overall passing efficiency of all robots in the warehouse.

Step S803: allocating a first sub-path leading to the target waiting site for the target robot, based on the target passage.

In this step, the specific method of determining the first sub-path based on the target passage is similar to the method of allocating a path leading to the destination for the target robot based on the target passage introduced in step S102 in the embodiment shown in Fig.1 above. The only difference is that the destination is replaced by the target waiting site, which will not be repeated here.

Step S804: allocating a second sub-path from the target waiting site leading to the destination for the target robot, based on the area where no goods shelf is placed.

In this step, the specific method of determining the second sub-path based on the area where no goods shelf is placed is similar to the method of allocating a path leading to the destination for the target robot based on the target passage introduced in step S102 in the embodiment shown in Fig.1 above. The only difference is that the current position of the robot is replaced by the target waiting site, and the target passage is replaced by the area where no goods shelf is placed, which will not be repeated here.

In one case, the scheduling device may perform this step after determining that the target robot has traveled to the target waiting site, and then allocate a second sub-path from the target waiting site leading to the destination for the target robot based on the area where no goods shelf is placed.

After determining the first sub-path, the scheduling device may first send the first sub-path to the target robot, and then allocate the second sub-path for the target robot after determining that the target robot has traveled to the target waiting site based on the first sub-path.

Specifically, after the target robot arrives at the target waiting site, it can send notification information indicating that it has arrived at the target waiting site to the scheduling device. After receiving the notification information, the scheduling device can determine that the target robot has arrived at the target waiting site.

Since the scheduling device can schedule multiple robots at the same time and the model of each robot can be different, the task execution efficiency of each robot is different from each other. Therefore, there will be a case that the target robot has not yet reached the target waiting site, but a robot closer to the destination is already in a free state. Obviously, it is more efficient to schedule the robot closer to the destination to the destination.

In this case, the destination is headed by other robots, and a new destination can be reallocated for the target robot. This will cause the second sub-path from the target waiting site to the original destination that has been allocated for the target robot to become invalid, thereby wasting the calculation resources used for allocating the second sub-path.

It can be seen that allocating a second sub-path leading to the destination for the target robot after determining that the target robot has traveled to the target waiting site can avoid the situation where the allocated second sub-path becomes invalid when the destination changes, which is beneficial to reducing the waste of the calculation resources and improving the flexibility of the path allocation solution.

Step S805: sending the allocated path to the target robot.

The above step S805 is the same as step S103 in the embodiment shown in Fig.1, which will not be repeated here.

It can be seen from the above description that when the solution provided by the embodiment of the present application is used to allocate the path for the robot, the first sub-path from the space under a goods shelf to the target waiting site can be allocated for the target robot based on the target passage, and then the second sub-path from the target waiting site leading to the destination can be allocated for the target robot based on the area where no goods shelf is placed. In this way, the target robot can successfully reach the destination by traveling along the first sub-path and the second sub-path.

Furthermore, the first sub-path is a path determined based on the target passage, and the second sub-path is determined based on the area where no goods shelf is placed. In this way, when the robot travels based on the first sub-path, it can first travel to the target waiting site along the target passage, that is, travel to the target waiting site through the space under the goods shelves; and then travel based on the second sub-path, to the destination through the area where no goods shelf is placed. It can be seen that in this way, when a path leading to the destination cannot be allocated for the robot by only selecting the target passage, a path to the destination for the target robot can be allocated by combining the first sub-path determined based on the target passage and the second sub-path determined based on the area where no goods shelf is placed, thereby improving the success rate of path allocation.

Furthermore, since the first sub-path is a path leading to the target waiting site, after the target robot travels to the target waiting site along the first sub-path, the scheduling device can determine whether the target robot waits at the target waiting site or continues traveling along the second sub-path based on the task execution status and congestion level of the robots in the current warehousing environment or other information, thereby reducing the probability of path conflicts between the target robot and other robots when traveling along the second sub-path, thereby reducing the probability of congestion of the robots in the warehouse.

Corresponding to the above method for path allocation, an embodiment of the present application further provides an apparatus for path allocation.

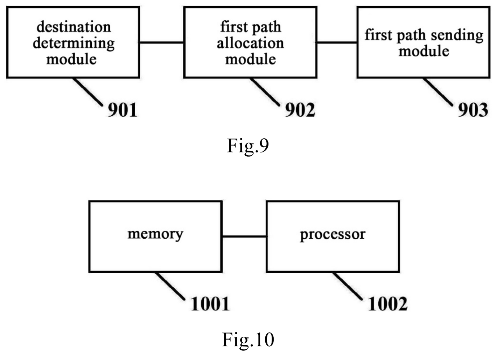

Referring to Fig.9, which is a schematic diagram of a structure of an apparatus for path allocation provided by an embodiment of the present application, the apparatus includes the following modules 901 to 903, wherein,
a destination determining module 901 is configured for determining, if a target robot is in a non-load state a destination of a target robot;
a first path allocation module 902 is configured for allocating a path leading to the destination for the target robot, based on a target passage in which space under goods shelves is not occupied by any robot;
a first path sending module 903 is configured for sending an allocated path to the target robot.

It can be seen from the above description that when the solution provided by the embodiment of the application is applied to allocate a path for a robot, the destination of the robot in a non-load state can be determined, and then a path leading to the destination can be allocated for the target robot based on the target passage in which the space under the goods shelves is not occupied by any robot, so that the target robot can smoothly travel to the destination along the allocated path.

The target passage is a passage in which the goods shelves are placed and the space under the goods shelves is not occupied by any robot, and the path allocated for the target robot is determined based on the target passage. In this way, when traveling along the path allocated based on the target passage, the target robot can pass through the space at the bottom of the goods shelves. Compared with directly allocating a path for the target robot based on an area where no goods shelf is placed, the passing pressure in the area in which no goods shelf is placed is reduced, and the number of robots traveling in the area where no goods shelf is placed is reduced, thereby reducing the occurrence of a conflict between paths of robots and reducing the probability of congestion of the robots in the warehouse.

In addition, the target passage is an area in which goods shelves are placed, and the space under the placed goods shelves is not occupied by any robot. Therefore, allocating a path for the target robot based on the target passage is actually allocating a path for the target robot based on the area in which goods shelves are placed. It can be seen that in the solution provided by the embodiment of the present application, when the area where no goods shelf is placed is small, a path can be allocated for the target robot additionally based on the target passage in which the space under the goods shelves is not occupied by any robot, that is, the path can be allocated for the target robot additionally based on the area in which the goods shelves are placed, so that when traveling to the destination along the allocated path, the robot can pass through the area in which no goods shelf is placed, and can additionally pass through the area in which the goods shelves are placed, and therefore the passing efficiency of the robot still maintains high when the proportion of the area where no goods shelf is placed is small. On this basis, compared with the prior art in which more passages are reserved to improve the passing efficiency, in the solution provided by the embodiment of the present application, the area in which the goods shelves are placed can be additionally used for path allocation, so the solution provided by the embodiment of the present application can reduce the number of the above passages while ensuring the passing efficiency, and the above reserved passages are areas in which no goods shelf is placed, thereby reducing the number of the above passages, that is, reducing the proportion of the area where no goods shelf is placed, thereby improving the storage space utilization rate of the warehouse.

In an embodiment of the present application, the first path allocation module 902 is specifically configured for selecting passage(s) from a passable passage by giving priority to the target passage, wherein the passable passage includes the target passage and an area in which no goods shelf is placed; and allocating the path leading to the destination for the target robot based on the selected passage(s).

It can be seen that in the solution provided by the embodiment of the present application, the passage(s) can be selected from the passable passage by giving priority to the target passage, and a path leading to the destination can be allocated for the target robot based on the selected passage(s). In this way, on the one hand, the length of the target passage in the allocated path is as long as possible, so that during the process of traveling along the allocated path to the destination, the path length that the robot travels in the target passage is relatively long, and the path length that the robot travels in the area where no goods are placed is relatively short, which is beneficial to reducing the passing pressure in the area where no goods are placed; on the other hand, more areas are considered when determining the path, which can avoid the situation where the path leading to the destination cannot be allocated for the target robot when only the target passage is selected, thereby improving the rationality and success rate of path allocation.

In an embodiment of the present application, the first path allocation module 902 includes:
a target waiting site determining sub-module, configured for determining, from robot waiting sites corresponding to the target passage, a target waiting site at which the target robot travels out from the space under goods shelves based on the destination;
a first path allocation sub-module, configured for allocating a first sub-path leading to the target waiting site for the target robot, based on the target passage;
a second path allocation sub-module, configured for allocating a second sub-path from the target waiting site leading to the destination for the target robot, based on the area in which no goods shelf is placed.

It can be seen from the above description that when the solution provided by the embodiment of the present application is used to allocate the path for the robot, the first sub-path from the space under the goods shelf to the target waiting site can be allocated for the target robot based on the target passage, and then the second sub-path from the target waiting site leading to the destination can be allocated for the target robot based on the area in which no goods shelf is placed. In this way, the target robot can successfully reach the destination by traveling along the first sub-path and the second sub-path.

Furthermore, the first sub-path is a path determined based on the target passage, and the second sub-path is a path determined based on the area in which no goods shelf is placed. In this way, when the robot travels based on the first sub-path, it can first travel to the target waiting site along the target passage, that is, travel to the target waiting site through the space under the goods shelves; and then travels based on the second sub-path, to the destination through the area in which no goods shelf is placed. It can be seen that in this way, a path leading to the destination cannot be allocated for the robot by only selecting the target passage, a path to the destination for the target robot can be allocated by combining the first sub-path determined based on the target passage and the second sub-path determined based on the area in which no goods shelf is placed, thereby improving the success rate of path allocation.

Furthermore, since the first sub-path is a path leading to the target waiting site, after the target robot travels to the target waiting site along the first sub-path, the scheduling device can determine whether the target robot waits at the target waiting site or continues traveling along the second sub-path based on the task execution status and congestion level of the robots in the current warehousing environment or other information, thereby reducing the probability of path conflicts between the target robot and other robots when traveling along the second sub-path, thereby reducing the probability of congestion of the robots in the warehouse.

In an embodiment of the present application, the second path allocation sub-module is specifically configured for, after determining that the target robot has traveled to the target waiting site, allocating the second sub-path from the target waiting site leading to the destination for the target robot, based on the area in which no goods shelf is placed.

It can be seen that allocating a second sub-path leading to the destination for the target robot after determining that the target robot has traveled to the target waiting site can avoid the situation where the allocated second sub-path becomes invalid when the destination changes, which is beneficial to reducing the waste of the calculation resources and improving the flexibility of the path allocation solution.

In an embodiment of the present application, the target waiting site determining sub-module is specifically configured for determining, from the robot waiting sites corresponding to the target passage, a target waiting site at which the target robot travels out from the space under the goods shelves and which is closest to the destination.

It can be seen that the target waiting site determined in this way is the closest to the destination, which makes the second sub-path leading to the destination from the target waiting site the shortest. Since the second sub-path is selected based on the area where no goods shelf is placed, the area where no goods shelf is placed that the robot passes through when traveling along the second sub-path can be as small as possible, which greatly reduces the passing pressure in the area where no goods shelf is placed and further reduces the probability of congestion of the robots in the warehouse.

In an embodiment of the present application, the first path allocation module is specifically configured for allocating a third sub-path for the target robot, based on the target passage in which the space under the goods shelves is not occupied by any robot; and allocating a fourth sub-path from an endpoint of the third sub-path leading to the destination for the target robot, based on an area in which no goods shelf is placed.

In this way, when the path from the current position of the robot to the destination cannot be determined by selecting only the target passage, the third sub-path is first determined based on the target passage, and then the fourth sub-path from the endpoint of the third sub-path leading to the destination is allocated for the target robot based on the area in which no goods shelf is placed, which avoids the situation where the path leading to the destination cannot be allocated for the target robot by only selecting the target passage, thereby improving the rationality and success rate of path allocation.

In an embodiment of the present application, the apparatus further includes:
a second path allocation module, configured for allocating, if the target robot is in a fully-load state, a path leading to the destination for the target robot based on an area in which no goods shelf is placed; and
a second path sending module, configured for sending an allocated path to the target robot.

It can be seen that although the robot in a fully-load state cannot travel in the target passage in which the space under the goods shelves is not occupied by any robot, it can travel in the area in which no goods shelf is placed. Therefore, a path leading to the destination can be successfully allocated for the target robot based on the area in which no goods shelf is placed.

In an embodiment of the present application, the area in which no goods shelf is placed includes a preset passage and a laneway storage area in which no goods shelf is placed in a warehouse.

When no goods shelf is placed in the laneway storage area, the laneway storage area can also be flexibly used as an area where no goods shelf is placed for the robot to pass through, which increases the proportion of the area where no goods shelf is placed available for the robot to pass through, which is beneficial to improving the robot passing efficiency.

In the technical solution of the present application, the involved operations, such as obtaining, storing, using, processing, transmitting, providing and disclosing, of the personal information of the user are all carried out when the user's authorization has been obtained.

An embodiment of the present application further provides an electronic device, as shown in Fig.10, including:
a memory 1001, configured to store a computer program;
a processor 1002, configured to implement the above method for path allocation when executing the program stored on the memory 1001.

Moreover, the electronic device may further include a communication bus and/or a communication interface, and the processor 1002, the communication interface, and the memory 1001 communicate with each other via the communication bus.

The communication bus mentioned in the above electronic device can be a Peripheral Component Interconnect (PCI) bus or an Extended Industry Standard Architecture (EISA) bus, etc. The communication bus can be divided into an address bus, a data bus, a control bus, etc. For ease of representation, it is represented by only one thick line in the figure, but it does not mean that there is only one bus or one type of bus.

The communication interface is used for communication between the above electronic device and other devices.

The memory may include a random access memory (RAM) or a non-volatile memory (NVM), such as at least one disk memory. Optionally, the memory may also be at least one storage device located away from the aforementioned processor.

The above processor can be a general-purpose processor, including a central processing unit (CPU), a network processor (NP), etc.; it can also be a digital signal processor (DSP), an application specific integrated circuit (ASIC), a field programmable gate array (FPGA) or other programmable logic devices, discrete gate or transistor logic devices, discrete hardware components.

In yet another embodiment provided by the present application, a computer-readable storage medium is provided, which has a computer program stored therein, wherein the computer program, when executed by a processor, carries out the above method for path allocation.

In yet another embodiment provided by the present application, a computer program product containing instructions is further provided, which, when running on a computer, causes the computer to carry out the above method for path allocation.

In the above embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the embodiments of the present application are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available medium. The usable media may be magnetic media (such as a floppy disk, a hard disk, a magnetic tape), optical media (such as DVD), and the like.

It should be noted that in this article, relational terms such as first and second are only to distinguish one entity or operation from another, and do not necessarily require or imply any actual relationship or order between these entities or operations. Moreover, the terms "include", "comprise", or any other variation thereof are intended to encompass a non-exclusive inclusion, such that a process, method, article, or device that includes a series of elements not only includes those elements, but also other elements that are not explicitly listed, or also include elements inherent in such a process, method, article, or device. Without further limitations, the elements limited by the statement "including one..." do not exclude the existence of other identical elements in the process, method, article, or device that includes the elements.

The various embodiments in this specification are described in a related manner. Each embodiment focuses on the differences from other embodiments, and the same and similar parts between the various embodiments can be referred to each other. Especially, for the embodiments of the apparatus, electronic device and storage medium, the description is relatively simple because it is basically similar to the embodiment of the method, and the relevant sites can be referred to the partial description of the embodiment of the method.

The above is only a preferred embodiment of the present invention and is not intended to limit the scope of protection of the present invention. Any modification, equivalent replacement, improvement, etc. made within the spirit and principles of this invention shall be included in the scope of protection of this invention.

## Claims

1. A method for path allocation, comprising:
determining, if a target robot is in a non-load state, a destination of the target robot;
allocating a path leading to the destination for the target robot, based on a target passage in which space under goods shelves is not occupied by any robot;
sending an allocated path to the target robot.

2. The method according to claim 1, wherein allocating the path leading to the destination for the target robot, based on the target passage in which the space under the goods shelves is not occupied by any robot, comprises:
selecting passage(s) from a passable passage by giving priority to the target passage, wherein the passable passage comprises the target passage and an area in which no goods shelf is placed;
allocating the path leading to the destination for the target robot based on selected passage(s).

3. The method according to claim 1, wherein allocating the path leading to the destination for the target robot, based on the target passage in which the space under the goods shelves is not occupied by any robot, comprises:
determining, from robot waiting sites corresponding to the target passage, a target waiting site at which the target robot travels out from space under goods shelves based on the destination;
allocating a first sub-path leading to the target waiting site for the target robot, based on the target passage;
allocating a second sub-path from the target waiting site leading to the destination for the target robot, based on an area in which no goods shelf is placed.

4. The method according to claim 3, wherein allocating the second sub-path from the target waiting site leading to the destination for the target robot, based on the area in which no goods shelf is placed, comprises:
after determining that the target robot has traveled to the target waiting site, allocating the second sub-path from the target waiting site leading to the destination for the target robot, based on the area in which no goods shelf is placed.

5. The method according to claim 3, wherein determining, from the robot waiting sites corresponding to the target passage, the target waiting site at which the target robot travels out from the space under the goods shelves based on the destination, comprises:
determining, from the robot waiting sites corresponding to the target passage, a target waiting site at which the target robot travels out from the space under the goods shelves and which is closest to the destination.

6. The method according to claim 1, wherein allocating the path leading to the destination for the target robot, based on the target passage in which the space under the goods shelves is not occupied by any robot, comprises:
allocating a third sub-path for the target robot, based on the target passage in which the space under the goods shelves is not occupied by any robot;
allocating a fourth sub-path from an endpoint of the third sub-path leading to the destination for the target robot, based on an area in which no goods shelf is placed.

7. The method according to any one of claims 1 to 6, further comprising:
allocating, if the target robot is in a fully-load state, a path leading to the destination for the target robot based on an area in which no goods shelf is placed;
sending an allocated path to the target robot.

8. The method according to any one of claims 2 to 6, wherein,
the area in which no goods shelf is placed comprises a preset passage and a laneway storage area in which no goods shelf is placed in a warehouse.

9. An apparatus for path allocation, comprising:
a destination determining module, configured for determining, if a target robot is in a non-load state a destination of a target robot;
a first path allocation module, configured for allocating a path leading to the destination for the target robot, based on a target passage in which space under goods shelves is not occupied by any robot;
a first path sending module, configured for sending an allocated path to the target robot.

10. The apparatus according to claim 9, wherein
the first path allocation module is specifically configured for selecting passage(s) from a passable passage by giving priority to the target passage, wherein the passable passage comprises the target passage and an area in which no goods shelf is placed; and allocating the path leading to the destination for the target robot based on the selected passage(s);
or
the first path allocation module comprises:
a target waiting site determining sub-module, configured for determining, from robot waiting sites corresponding to the target passage, a target waiting site at which the target robot travels out from the space under goods shelves based on the destination; a first path allocation sub-module, configured for allocating a first sub-path leading to the target waiting site for the target robot, based on the target passage; and a second path allocation sub-module, configured for allocating a second sub-path from the target waiting site leading to the destination for the target robot, based on the area in which no goods shelf is placed;
or
the second path allocation sub-module is specifically configured for, after determining that the target robot has traveled to the target waiting site, allocating the second sub-path from the target waiting site leading to the destination for the target robot, based on the area in which no goods shelf is placed;
or
the target waiting site determining sub-module is specifically configured for determining, from the robot waiting sites corresponding to the target passage, a target waiting site at which the target robot travels out from the space under the goods shelves and which is closest to the destination;
or
the first path allocation module is specifically configured for allocating a third sub-path for the target robot, based on the target passage in which the space under the goods shelves is not occupied by any robot; and allocating a fourth sub-path from an endpoint of the third sub-path leading to the destination for the target robot, based on an area in which no goods shelf is placed;
or
the apparatus further comprises: a second path allocation module, configured for allocating, if the target robot is in a fully-load state, a path leading to the destination for the target robot based on an area in which no goods shelf is placed; and a second path sending module, configured for sending an allocated path to the target robot;
or
the area in which no goods shelf is placed comprises a preset passage and a laneway storage area in which no goods shelf is placed in a warehouse.

11. An electronic device, comprising:
a memory, configured for storing a computer program;
a processor, configured for implementing the method according to any one of claims 1 to 8 when executing the program stored on the memory.

12. A computer-readable storage medium having a computer program stored therein, wherein the computer program, when executed by a processor, implements the method according to any one of claims 1 to 8.
